(19) Europäisches Patentamt
European Patent Office
Office européen des brevets

(11) **EP 4 718 861 A1**

(12) **EUROPEAN PATENT APPLICATION**

(43) Date of publication:
01.04.2026 Bulletin 2026/14

(21) Application number: 25215940.5

(22) Date of filing: 14.11.2025

(51) International Patent Classification (IPC):
H04N 23/88 (2023.01)        H04N 23/81 (2023.01)
H04N 23/84 (2023.01)        H04N 25/61 (2023.01)
H04N 9/31 (2006.01)         G06T 7/90 (2017.01)

(52) Cooperative Patent Classification (CPC):
H04N 23/88; G06T 7/90; H04N 9/67; H04N 23/81;
H04N 23/84; H04N 25/61

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 28.11.2024 CN 202411733784

(71) Applicant: Beijing Horizon Robotics Technology
Research and
Development Co., Ltd.
Beijing 100094 (CN)

(72) Inventor: Wang, Jingyao
Beijing, 100094 (CN)

(74) Representative: Patentanwälte Magenbauer &
Kollegen
Partnerschaft mbB
Plochinger Straße 109
73730 Esslingen (DE)

(54) **WHITE BALANCE CORRECTION METHOD AND APPARATUS FOR IMAGES, STORAGE MEDIUM, AND ELECTRONIC DEVICE**

(57) Disclosed are a white balance correction method and apparatus for images, a storage medium, and an electronic device. The method includes: determining a first quantum efficiency response curve for a reference image sensor; determining a second quantum efficiency response curve for a target image sensor, where a color filter array of the target image sensor is different from that of the reference image sensor; determining a target matrix for conversion between the second quantum efficiency response curve and the first quantum efficiency response curve; determining a first white balance Planckian curve for the target image sensor; determining a white balance compensation parameter adaptable to the target image sensor based on the target matrix, the first white balance Planckian curve, and a first image collected by the target image sensor; performing, based on the white balance compensation parameter, white balance correction on a second image collected by the target image sensor.

Determining a first quantum efficiency response curve for a reference image sensor —110

Determining a second quantum efficiency response curve for a target image sensor, wherein a color filter array of the target image sensor is different from that of the reference image sensor —120

Determining a target matrix for conversion between the second quantum efficiency response curve and the first quantum efficiency response curve —130

Determining a first white balance Planckian curve for the target image sensor —140

Determining a white balance compensation parameter adaptable to the target image sensor based on the target matrix, the first white balance Planckian curve, and a first image collected by the target image sensor —150

Performing, based on the white balance compensation parameter, white balance correction on a second image collected by the target image sensor —160

FIG. 1

EP 4 718 861 A1

**Description**

**FIELD OF THE INVENTION**

This disclosure relates to machine vision technologies, and in particular, to a white balance correction method and apparatus for images, a storage medium, and an electronic device.

**BACKGROUND OF THE INVENTION**

Currently, image sensors are widely applied. In some scenarios, it is needed to perform white balance correction on images collected by the image sensors. In related technologies, good white balance correction effects cannot be achieved for image sensors using some color filter arrays. For example, for an image sensor using an RCCG array, an image on which white balance correction has been performed may experience color casts, wherein R represents red, C represents clear, and G represents green.

**SUMMARY OF THE INVENTION**

To resolve the foregoing technical problems, this disclosure provides a white balance correction method and apparatus for images, a storage medium, and an electronic device.

According to an aspect of an embodiment of this disclosure, a white balance correction method for images is provided, including:

determining a first quantum efficiency response curve for a reference image sensor;
determining a second quantum efficiency response curve for a target image sensor, wherein a color filter array of the target image sensor is different from that of the reference image sensor;
determining a target matrix for conversion between the second quantum efficiency response curve and the first quantum efficiency response curve;
determining a first white balance Planckian curve for the target image sensor;
determining a white balance compensation parameter adaptable to the target image sensor based on the target matrix, the first white balance Planckian curve, and a first image collected by the target image sensor; and
performing, based on the white balance compensation parameter, white balance correction on a second image collected by the target image sensor.

According to another aspect of an embodiment of this disclosure, a white balance correction apparatus for images is provided, including:

a first determining module, configured to determine a first quantum efficiency response curve for a reference image sensor;
a second determining module, configured to determine a second quantum efficiency response curve for a target image sensor of which a color filter array is different from that of the reference image sensor;
a third determining module, configured to determine a target matrix for conversion between the second quantum efficiency response curve determined by the second determining module and the first quantum efficiency response curve determined by the first determining module;
a fourth determining module, configured to determine a first white balance Planckian curve for the target image sensor;
a fifth determining module, configured to determine a white balance compensation parameter adaptable to the target image sensor based on the target matrix determined by the third determining module, the first white balance Planckian curve determined by the fourth determining module, and a first image collected by the target image sensor; and
a processing module, configured to perform, based on the white balance compensation parameter determined by the fifth determining module, white balance correction on a second image collected by the target image sensor.

According to still another aspect of an embodiment of this disclosure, a computer readable storage medium is provided. The storage medium stores a computer program, when executed by a processor, causes the processor to implement the white balance correction method for images described above.

According to a still yet another aspect of an embodiment of this disclosure, an electronic device is provided, wherein the electronic device includes:

a processor; and

a memory, configured to store processor-executable instructions, wherein

the processor is configured to read the executable instructions from the memory, and execute the instructions to implement the white balance correction method for images described above.

According to a further aspect of an embodiment of this disclosure, a computer program product is provided. When instructions in the computer program product are executed by a processor, the white balance correction method for images described above is implemented.

Based on the white balance correction method and apparatus for images, the storage medium, the electronic device, and the program product that are provided in the foregoing embodiments of this disclosure, an image sensor using a type 2 color filter array may be used as the reference image sensor, and an image sensor using a type 1 color filter array may be used as the target image sensor, the target matrix used for the conversion between the quantum efficiency response curves of the reference image sensor and the target image sensor is determined. Further, the white balance compensation parameter adaptable to the target image sensor may be determined in combination with the first white balance Planckian curve of the target image sensor and the first image collected by the target image sensor, so as to perform, based on the white balance compensation parameter adaptable to the target image sensor, white balance correction on the second image collected by the target image sensor. In this way, although there is a significant difference in imaging characteristics between the target image sensor and the reference image sensor, which makes a white balance correction method for the reference image sensor unsuitable for the target image sensor, a dedicated white balance compensation parameter can still be reasonably determined for the target image sensor, to be used for white balance correction for the second image collected by the target image sensor. In this way, for images collected by the image sensor using the type 1 color filter array, a new adaptable white balance correction method may be used to achieve good white balance correction effects.

**BRIEF DESCRIPTION OF THE DRAWINGS**

FIG. 1 is a schematic flowchart of a white balance correction method for images according to some exemplary embodiments of this disclosure;

FIG. 2 is a schematic flowchart of a method for determining a white balance compensation parameter adaptable to a target image sensor based on a target matrix, a first white balance Planckian curve, and a first image collected by the target image sensor according to some exemplary embodiments of this disclosure;

FIG. 3 is a schematic flowchart of a method for determining a white balance compensation parameter adaptable to a target image sensor based on a target matrix, a second white balance Planckian curve, and a target gray area according to some exemplary embodiments of this disclosure;

FIG. 4 is a schematic flowchart of a method for determining weights respectively corresponding to a plurality of sub-blocks based on a second white balance Planckian curve and positions respectively corresponding to the plurality of sub-blocks according to some exemplary embodiments of this disclosure;

FIG. 5 is a schematic flowchart of a method for determining weights respectively corresponding to a plurality of sub-blocks based on a second white balance Planckian curve and positions respectively corresponding to the plurality of sub-blocks according to some other exemplary embodiments of this disclosure;

FIG. 6 is a schematic flowchart of a method for determining, based on a target matrix and respective color information about a plurality of sub-blocks, positions respectively corresponding to the plurality of sub-blocks in a coordinate system in which a second white balance Planckian curve is located according to some exemplary embodiments of this disclosure;

FIG. 7 is a schematic flowchart of a method for determining a white balance compensation parameter adaptable to a target image sensor based on a weighted position and an inverse matrix of the target matrix according to some exemplary embodiments of this disclosure;

FIG. 8-1 is a schematic diagram of distribution of several points on a white balance Planckian curve that is used to define an RCCG image sensor in related technologies;

FIG. 8-2 is a schematic diagram of distribution of several points on an RCCG white balance Planckian curve that is used to define similar-RGGB characteristics according to some exemplary embodiments of this disclosure;

FIG. 9 is a schematic diagram of a structure of a white balance correction apparatus for images according to some exemplary embodiments of this disclosure;

FIG. 10 is a schematic diagram of a structure of a fifth determining module according to some exemplary embodiments of this disclosure;

FIG. 11 is a schematic diagram of a structure of a second determining submodule according to some exemplary embodiments of this disclosure;

FIG. 12 is a schematic diagram of a structure of a second determining unit according to some exemplary embodiments of this disclosure;

FIG. 13 is a schematic diagram of a structure of a fourth determining unit according to some exemplary embodiments of this disclosure;

FIG. 14 is a schematic diagram of a structure of a third determining unit according to some exemplary embodiments of this disclosure;

FIG. 15 is a schematic diagram of a structure of a third determining unit according to some other exemplary embodiments of this disclosure; and

FIG. 16 is a schematic diagram of a structure of an electronic device according to some exemplary embodiments of this disclosure.

## DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

Application overview

Currently, image sensors are widely applied. Based on a color filter array (CFA) of the image sensor, an image collected by the image sensor may have colors. The color filter array may include but is not limited to an RCCG array, an RCCB array, and an RGGB array. Correspondingly, the image sensors may include but are not limited to an RCCG image sensor, an RCCB image sensor, and an RGGB image sensor, wherein R represents red, C represents clear transmission, G represents green, and B represents blue.

In a process of using an image signal processing (ISP) system to process the image collected by the image sensor, white balance correction is often required to be performed on the image collected by the image sensor. White balance may be understood as balance of white. To be specific, a white target object in a real physical world still appears white in the image, so that the image can reflect colors of the target object accurately. Algorithms for implementing white balance correction may include but are not limited to a grayscale world method, a perfect reflection method, and a dynamic thresholding method.

In related technologies, for images collected by image sensors using some color filter arrays, good white balance correction effects cannot be achieved. For example, for an image collected by an image sensor using an RCCG array, the image on which white balance correction has been performed may appear reddish or purplish. How to achieve good white balance correction effects for the images collected by the image sensors using these color filter arrays is an issue worthy of attention for a person skilled in the art.

Exemplary system

In related technologies, although good white balance correction effects cannot be achieved for images collected by image sensors using some color filter arrays (which may be referred to as type 1 color filter arrays hereinafter), good white balance correction effects can be achieved for images collected by image sensors using some other color filter arrays (which may be referred to as type 2 color filter arrays hereinafter). For example, good white balance correction effects cannot be achieved for an image collected by an image sensor using an RCCG array, while good white balance correction effects can be achieved for an image collected by an image sensor using an RGGB array. The inventor finds through research that a reason why good white balance correction effects cannot be achieved for the image collected by the image sensor using the RCCG array is as follows: A white balance correction method for the image sensor using the RGGB array is directly reused for the image collected by the image sensor using the RCCG array, but there is a significant difference in imaging characteristics between the image sensor using the RCCG array and the image sensor using the RGGB array. As a result, the white balance correction method is unsuitable for the image collected by the image sensor using the RCCG array.

In view of the above, in embodiments of this disclosure, an image sensor using the type 2 color filter array may be used as a reference image sensor, and an image sensor using the type 1 color filter array may be used as a target image sensor. A target matrix used for conversion between quantum efficiency response curves of the reference image sensor and the target image sensor is determined. Further, a white balance compensation parameter adaptable to the target image sensor may be determined in combination with a first white balance Planckian curve of the target image sensor and a first image collected by the target image sensor, so as to perform white balance correction on a second image collected by the target image sensor. In this way, for images collected by the image sensor using the type 1 color filter array, a new adaptable white balance correction method may be used to achieve good white balance correction effects.

Exemplary method

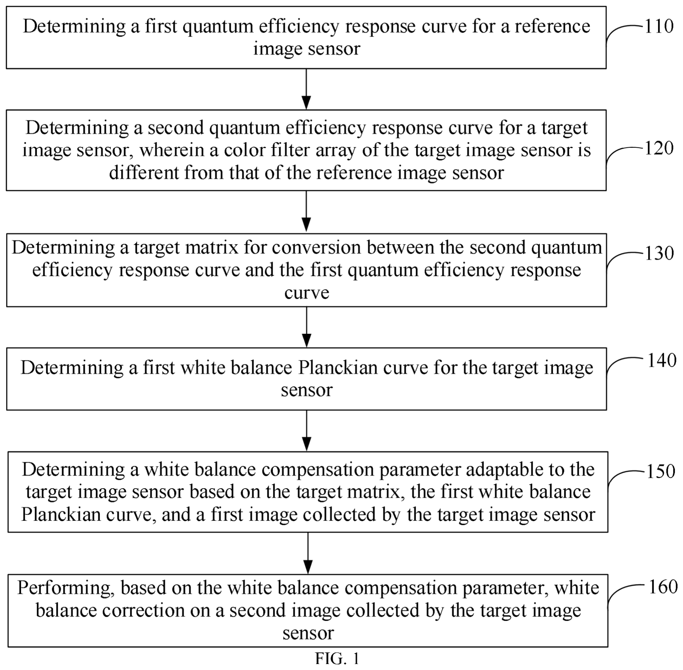

FIG. 1 is a schematic flowchart of a white balance correction method for images according to some exemplary embodiments of this disclosure. The method shown in FIG. 1 may include steps 110, 120, 130, 140, 150, and 160.

Step 110: Determining a first quantum efficiency (QE) response curve for a reference image sensor.

Optionally, the reference image sensor may be an image sensor used as a reference benchmark, to assist in obtaining white balance compensation parameters adaptable to other image sensors. A color filter array of the reference image sensor may be a type 2 color filter array. For example, the color filter array of the reference image sensor may be an RGGB array. Correspondingly, the reference image sensor may be an RGGB image sensor. The white balance compensation parameter may be a parameter used for white balance correction of images.

Optionally, a first quantum efficiency response curve of the reference image sensor may be a curve with wavelength as a horizontal coordinate and responsivity as a vertical coordinate. For example, a value range of the wavelength may be from 400 nanometers to 700 nanometers, and a range of the responsivity may be from 0% to 100%. The first quantum efficiency response curve of the reference image sensor may also be referred to as QE data of the reference image sensor.

Step 120: Determining a second quantum efficiency response curve for a target image sensor, where a color filter array of the target image sensor is different from that of the reference image sensor.

Optionally, the target image sensor may be an image sensor that needs to determine an adaptable white balance compensation parameter. The color filter array of the target image sensor may be a type 1 color filter array. The color filter array of the target image sensor may be different from the RGGB array. In other words, the color filter array of the target image sensor may be a non-RGGB array. Correspondingly, the target image sensor may be a non-RGGB image sensor. For example, the color filter array of the target image sensor may be an RCCG array or an RCCB array. Correspondingly, the target image sensor may be an RCCG image sensor or an RCCB image sensor.

Optionally, a second quantum efficiency response curve of the target image sensor may be a curve with wavelength as a horizontal coordinate and responsivity as a vertical coordinate. The second quantum efficiency response curve of the target image sensor may also be referred to as QE data of the target image sensor.

Step 130: Determining a target matrix for conversion between the second quantum efficiency response curve and the first quantum efficiency response curve.

Optionally, the second quantum efficiency response curve and the first quantum efficiency response curve may be different curves drawn under a same coordinate system. A matrix for conversion between different curves may be determined by using a least square method or other regression algorithms, and the determined matrix may be used as the target matrix. The target matrix may also be referred to as a QE correction matrix. For example, a size of the target matrix may be 3*3. To be specific, there may be 3 rows and 3 columns in the target matrix.

Step 140: Determining a first white balance Planckian curve for the target image sensor.

Optionally, the first white balance Planckian curve of the target image sensor may be a curve with a first type of ratio as a horizontal coordinate and a second type of ratio as a vertical coordinate. The first type of ratio and the second type of ratio may both be ratios used to reflect color differences between channels.

For example, if the color filter array of the target image sensor is an RCCG array, the first type of ratio may be a ratio of a pixel value of an R channel to a pixel value of a C channel, and the second type of ratio may be a ratio of a pixel value of a G channel to the pixel value of the C channel.

For another example, if the color filter array of the target image sensor is an RCCB array, the first type of ratio may be a ratio of a pixel value of an R channel to a pixel value of a C channel, and the second type of ratio may be a ratio of a pixel value of a B channel to the pixel value of the C channel.

Step 150: Determining a white balance compensation parameter adaptable to the target image sensor based on the target matrix, the first white balance Planckian curve, and a first image collected by the target image sensor.

Optionally, the first image may be a native image obtained by capturing images for a pre-determined object. The pre-determined object may include but is not limited to a 24-color chart or a gray card, provided that it is ensured that there is a gray area in the first image. The gray area may be understood as an area that visually appears white, black, or gray. The native image may also be referred to as Raw data.

Optionally, the white balance compensation parameter adaptable to the target image sensor may refer to a parameter suitable for white balance correction for images collected by the target image sensor. This parameter is used to guide how to perform color compensation between channels, so that a white target object in a real physical world appears white in the image.

Step 160: Performing, based on the white balance compensation parameter, white balance correction on a second image collected by the target image sensor.

Optionally, the second image may be either a native image obtained by capturing images for the pre-determined object, or a native image obtained by capturing images for objects except the pre-determined object. The second image and the first image may be a same image or different images.

Herein, the second image is raw data obtained by the target image sensor through image collection. According to the white balance compensation parameter, white balance correction may be directly performed on the raw data that is used as the second image. Alternatively, the raw data that is used as the second image may be first converted into an image (non-raw data) suitable for user observation, and then white balance correction may be performed on the image obtained through conversion.

In the foregoing embodiments of this disclosure, an image sensor using the type 2 color filter array may be used as the reference image sensor, and an image sensor using the type 1 color filter array may be used as the target image sensor. The target matrix used for the conversion between the quantum efficiency response curves of the reference image sensor and the target image sensor is determined. Further, the white balance compensation parameter adaptable to the target image sensor may be determined in combination with the first white balance Planckian curve of the target image sensor and the first image collected by the target image sensor, so as to perform, based on the white balance compensation parameter adaptable to the target image sensor, white balance correction on the second image collected by the target image sensor. In this way, although there is a significant difference in imaging characteristics between the target image sensor and the reference image sensor, which makes a white balance correction method for the reference image sensor unsuitable for the target image sensor, a dedicated white balance compensation parameter can still be reasonably determined for the target image sensor, to be used for white balance correction for the second image collected by the target image sensor. In this way, for images collected by the image sensor using the type 1 color filter array, a new adaptable white balance correction method may be used to achieve good white balance correction effects.

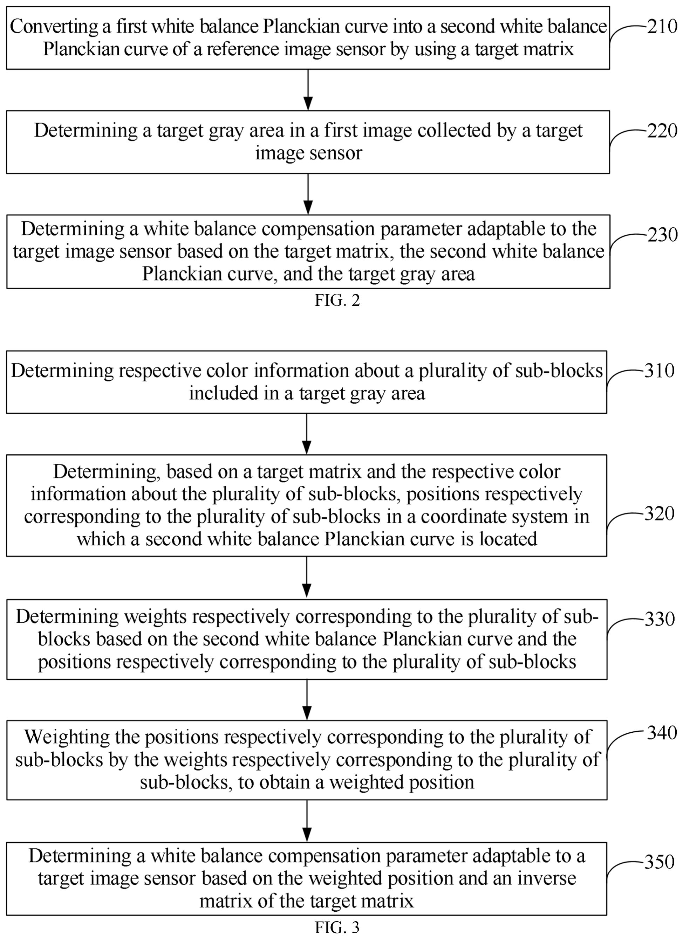

FIG. 2 is a schematic flowchart of a method for determining a white balance compensation parameter adaptable to a target image sensor based on a target matrix, a first white balance Planckian curve, and a first image collected by the target image sensor according to some exemplary embodiments of this disclosure. The method shown in FIG. 2 may include steps 210, 220, and 230.

Step 210: Converting the first white balance Planckian curve into a second white balance Planckian curve of the reference image sensor by using the target matrix.

As described above, the target matrix may be used for the conversion between the second quantum efficiency response curve and the first quantum efficiency response curve. In this case, there may be two possibilities for the target matrix. Scenario 1: The target matrix is used to map the second quantum efficiency response curve to the first quantum efficiency response curve. Scenario 2: The target matrix is used to map the first quantum efficiency response curve to the second quantum efficiency response curve. For ease of understanding, description is made below by using the scenario 1 as an example.

Optionally, the first white balance Planckian curve may be represented by M1, the second white balance Planckian curve of the reference image sensor may be represented by M2, and the target matrix may be represented by Mqe. In this case, M2 may be obtained by the following formula:

$$M2=M1*Mqe$$

It should be noted that the second white balance Planckian curve of the reference image sensor is not a real white balance Planckian curve of the reference image sensor, but is a white balance Planckian curve of the reference image sensor that is inferred based on the target matrix and the first white balance Planckian curve.

Step 220: Determining a target gray area in the first image collected by the target image sensor.

Optionally, a user input operation may be received, and a gray area selected by the user input operation in the first image may be used as the target gray area. The user input operation may include but is not limited to a touch input operation, a keyboard input operation, or a mouse input operation.

For example, the first image may be a native image obtained by capturing images for a 24-color chart. There may be a total of 24 color blocks in 4 rows and 6 columns in the first image, and the gray area selected by the user input operation in the first image may include 6 color blocks in a last row among the 24 color blocks. In other words, the target gray area includes the 6 color blocks in the last row among the 24 color blocks.

In some embodiments, the target gray area may also be determined according to an algorithm without relying on the user input operation. For example, a neural network model may be pre-trained to recognize the gray area from the image, and the target gray area may be recognized from the first image by using the pre-trained neural network model.

Step 230: Determining the white balance compensation parameter adaptable to the target image sensor based on the target matrix, the second white balance Planckian curve, and the target gray area.

Optionally, color information about the target gray area may be determined. Assuming that the target gray area includes the 6 color blocks in the last row among the 24 color blocks, the color information about the target gray area may include respective color information about the 6 color blocks in the last row among the 24 color blocks. Subsequently, the white balance compensation parameter adaptable to the target image sensor may be determined based on the target matrix, the second white balance Planckian curve, and the respective color information about the target gray area.

It should be noted that the first quantum efficiency response curve may affect the imaging characteristics of the reference image sensor, and the second quantum efficiency response curve may affect the imaging characteristics of the target image sensor. Therefore, the target matrix used for the conversion between the second quantum efficiency response curve and the first quantum efficiency response curve may be used to characterize a relationship between the respective imaging characteristics of the target image sensor and the reference image sensor. Because the first white balance Planckian curve is an imaging characteristic of the target image sensor, the relationship between the imaging characteristics that is represented by the target matrix may be used to efficiently and reliably infer the second white balance Planckian curve for the reference image sensor. The white balance compensation parameter adaptable to the target image sensor is determined based on the target matrix, the second white balance Planckian curve, and the target gray area of the first image collected by the target image sensor. Information related to the imaging characteristics of the image sensor can be effectively utilized in the process of determining the white balance compensation parameter, which helps to ensure adaptability between the white balance compensation parameter and the target image sensor, thereby ensuring rationality and reliability of the determined white balance compensation parameter.

FIG. 3 is a schematic flowchart of a method for determining a white balance compensation parameter adaptable to a target image sensor based on a target matrix, a second white balance Planckian curve, and a target gray area according to some exemplary embodiments of this disclosure. The method shown in FIG. 3 may include steps 310, 320, 330, 340, and 350.

Step 310: Determining respective color information about a plurality of sub-blocks included in the target gray area.

Optionally, the plurality of sub-blocks included in the target gray area may be represented as N sub-blocks, wherein N may be an integer greater than or equal to 2. Referring to the foregoing example, if the target gray area may include the 6 color blocks in the last row among the 24 color blocks, each of these 6 color blocks may be used as a sub-block. Correspondingly, N may be 6.

In an example, the target image sensor may be an RCCG image sensor, and the color information about each of the N sub-blocks may include a pixel value of this sub-block on the R channel, a pixel value of this sub-block on the C channel, and a pixel value of this sub-block on the G channel. It is assumed that there are a total of U pixels in this sub-block, wherein there are U1 pixels corresponding to the R channel, U2 pixels corresponding to the C channel, and U3 pixels corresponding to the G channel. An average of U1 pixel values in one-to-one correspondence to the U1 pixels may be used as the pixel value of this sub-block on the R channel, an average of U2 pixel values in one-to-one correspondence to the U2 pixels may be used as the pixel value of this sub-block on the C channel, and an average of U3 pixel values in one-to-one correspondence to the U3 pixels may be used as the pixel value of this sub-block on the G channel.

Certainly, manners for determining the pixel values of this sub-block on the R channel, the C channel, and the G channel are not limited thereto. For example, interpolation processing may be performed on the first image to obtain a first full-resolution image corresponding to the R channel of the first image, a second full-resolution image corresponding to the C channel of the first image, and a third full-resolution image corresponding to the G channel of the first image. The first full-resolution image may include a pixel value, on the R channel, of each pixel in the first image. The second full-resolution image may include a pixel value, on the C channel, of each pixel in the first image. The third full-resolution image may include a pixel value, on the G channel, of each pixel in the first image. U pixel values in one-to-one correspondence to the U pixels in the sub-block may be obtained from the first full-resolution image, and an average of the obtained U pixel values may be used as the pixel value of the sub-block on the R channel. U pixel values in one-to-one correspondence to the U pixels in the sub-block may be obtained from the second full-resolution image, and an average of the obtained U pixel values may be used as the pixel value of the sub-block on the C channel. U pixel values in one-to-one correspondence to the U pixels in the sub-block may be obtained from the third full-resolution image, and an average of the obtained U pixel values may be used as the pixel value of the sub-block on the G channel.

In another example, the target image sensor may be an RCCB image sensor, and the color information about each sub-block in the N sub-blocks may include a pixel value of this sub-block on the R channel, a pixel value of this sub-block on the G channel, and a pixel value of this sub-block on the B channel. For manners for determining the pixel values of this sub-block on the R channel, the C channel, and the B channel, reference may be made to the relevant description in the foregoing example, and details are not described herein again.

Step 320: Determining, based on the target matrix and the respective color information about the plurality of sub-blocks, positions respectively corresponding to the plurality of sub-blocks in a coordinate system in which the second white balance Planckian curve is located.

Optionally, the second white balance Planckian curve may be plotted under the coordinate system that uses the first type of ratio as the horizontal coordinate and uses the second type of ratio as the vertical coordinate. This coordinate system is the one in which the second white balance Planckian curve is located.

Optionally, for each of the N sub-blocks, the position corresponding to this sub-block may be determined, based on the target matrix and the color information about this sub-block, in the coordinate system in which the second white balance Planckian curve is located. The position corresponding to this sub-block may be a position of a point in the coordinate system in which the second white balance Planckian curve is located.

Step 330: Determining weights respectively corresponding to the plurality of sub-blocks based on the second white balance Planckian curve and the positions respectively corresponding to the plurality of sub-blocks.

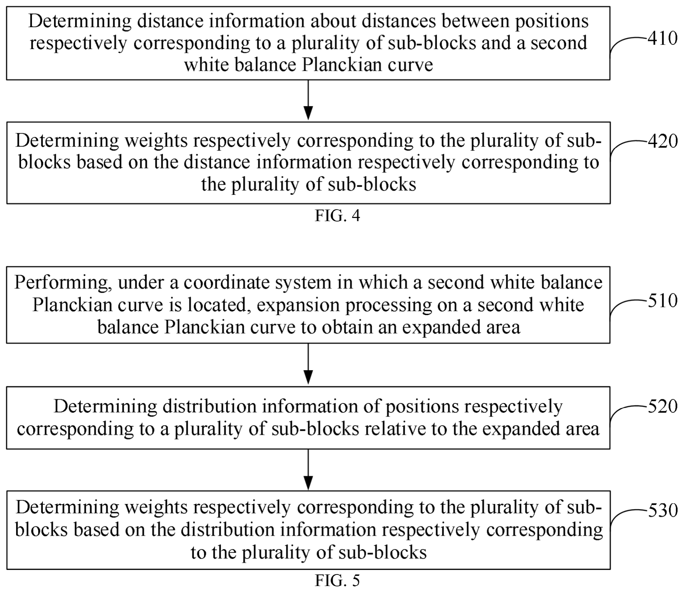

In some optional implementations of this disclosure, as shown in FIG. 4, step 330 may include steps 410 and 420.

Step 410: Determining distance information about distances between the positions respectively corresponding to the plurality of sub-blocks and the second white balance Planckian curve.

Since the position corresponding to each of the N sub-blocks may be a position of a point in the coordinate system in which the second white balance Planckian curve is located, a value of the distance between this point in the coordinate system and the second white balance Planckian curve may be determined according to a manner used in related technologies for calculating a value of a distance from a point to a line. The determined distance value may be used as the information about the distance between the position corresponding to this sub-block and the second white balance Planckian curve.

Step 420: Determining the weights respectively corresponding to the plurality of sub-blocks based on the distance information respectively corresponding to the plurality of sub-blocks.

Optionally, a target function may be predefined with the distance information as an independent variable and the weight as a dependent variable, wherein the dependent variable is negatively correlated with the independent variable. For example, the target function may be a linear function with a slope less than 0 or an exponential function with a base less than 1, and so on.

Optionally, for each sub-block among the N sub-blocks, the distance information corresponding to this sub-block may be used as a value of the independent variable and substituted into the target function for calculation, so as to obtain a corresponding value of the dependent variable, and the obtained value may be used as the weight corresponding to this sub-block.

In this way, the weights respectively corresponding to the plurality of sub-blocks may be reasonably determined based on the information about the distances between the positions respectively corresponding to the plurality of sub-blocks and the second white balance Planckian curve. For example, the weights respectively corresponding to the plurality of sub-blocks may be determined according to the following rules: If the position corresponding to the sub-block is closer to the second white balance Planckian curve, the weight corresponding to the sub-block is greater; and if the position corresponding to the sub-block is further away from the second white balance Planckian curve, the weight corresponding to the sub-block is smaller. Using the determined weight to determine the white balance compensation parameter helps to ensure rationality and reliability of the white balance compensation parameter.

In some other optional implementations of this disclosure, as shown in FIG. 5, step 330 may include steps 510, 520, and 530.

Step 510: Performing, under the coordinate system in which the second white balance Planckian curve is located, expansion processing on the second white balance Planckian curve to obtain an expanded area.

Optionally, in the coordinate system in which the second white balance Planckian curve is located, the second white balance Planckian curve may be used as a centerline and expanded by 1/2 of a predefined width on left and right both sides to obtain an expanded area with the preset width. A value of the preset width may be set according to actual situations, which is not limited in this disclosure.

Step 520: Determining distribution information of the positions respectively corresponding to the plurality of sub-blocks relative to the expanded area.

Optionally, for each of the N sub-blocks, the distribution information of the position corresponding to this sub-block relative to the expanded area may indicate whether the position corresponding to this sub-block is within the expanded area.

Step 530: Determining the weights respectively corresponding to the plurality of sub-blocks based on the distribution information respectively corresponding to the plurality of sub-blocks.

Optionally, for each of the N sub-blocks, if the distribution information corresponding to this sub-block indicates that the position corresponding to this sub-block is within the expanded area, a first preset weight may be used as the weight corresponding to this sub-block. If the distribution information corresponding to this sub-block indicates that the position corresponding to this sub-block is not within the expanded area, a second preset weight may be used as the weight corresponding to this sub-block. For example, the first preset weight may be 1, and the second preset weight may be 0.

In this way, the expanded area may be efficiently and quickly determined by performing expansion processing on the second white balance Planckian curve, and the weights respectively corresponding to the plurality of sub-blocks may be reasonably determined based on the distribution information of the positions respectively corresponding to the plurality of sub-blocks relative to the expanded area. For example, the weights corresponding to the plurality of sub-blocks may be determined according to the following rules: If the position corresponding to the sub-block is within the expanded area, the weight corresponding to the sub-block is 1; and if the position corresponding to the sub-block is outside the expanded area, the weight corresponding to the sub-block is 0. Using the determined weight to determine the white balance compensation parameter helps to ensure rationality and reliability of the white balance compensation parameter.

Optionally, the implementations shown in FIG. 4 and FIG. 5 may also be used in combination. For example, the weights respectively corresponding to the plurality of sub-blocks may be determined based on the distance information respectively corresponding to the plurality of sub-blocks and the distribution information respectively corresponding to the plurality of sub-blocks.

Regardless of the implementation manner adopted in step 330, after the weights respectively corresponding to the plurality of sub-blocks are determined, step 340 can be executed based on the weights respectively corresponding to the plurality of sub-blocks.

Step 340: Weighting the positions respectively corresponding to the plurality of sub-blocks by the weights respectively corresponding to the plurality of sub-blocks, to obtain a weighted position.

Optionally, the plurality of sub-blocks may be N sub-blocks. The N sub-blocks may be in one-to-one correspondence to N positions, and may also be in one-to-one correspondence to N weights. The N positions may be weighted and averaged by using the N weights, to obtain a weighted position.

In an example, the N weights are represented by $K_1$, $K_2$, $K_3$, ..., and $K_N$; the N positions are represented by $P_1$, $P_2$, $P_3$, ..., $P_N$; and the weighted position is represented by P. In this case, it is satisfied that:

$$P=(K_1*P_1+K_2*P_2+K_3*P_3+...+K_N*P_N)/(K_1+K_2+K_3+...+K_N)$$

Step 350: Determining the white balance compensation parameter adaptable to the target image sensor based on the weighted position and an inverse matrix of the target matrix.

Optionally, the weighted position may be a position of a point in the coordinate system in which the second white balance Planckian curve is located. Thus, the white balance compensation parameter adaptable to the target image sensor may be determined based on a horizontal coordinate and a vertical coordinate of that point and the inverse matrix of the target matrix. For example, the target matrix may be represented by Mqe, and the inverse matrix of the target matrix may be represented by $Mqe^{-1}$.

In the embodiments of this disclosure, based on the target matrix and the respective color information about the plurality of sub-blocks included in the target gray area, the positions respectively corresponding to the plurality of sub-blocks may be reasonably determined in the coordinate system in which the second white balance Planckian curve is located. On this basis, the weights respectively corresponding to the plurality of sub-blocks may be reasonably determined, and the determined positions may be weighted based on the determined weights. The weighted position obtained through weighting and the inverse matrix of the target matrix may be used to determine the white balance compensation parameter. In this way, adverse effects that may be brought in by only considering relevant information of a single sub-block may be avoided through the introduction of the weighted average operation, which helps to ensure rationality and reliability of the determined white balance compensation parameter.

In some embodiments, there may be a plurality of, such as M, first images. A corresponding target gray area may be determined for each of the M first images. For the target gray area corresponding to each first image, the embodiment shown in FIG. 3 may be adopted to determine a corresponding white balance compensation parameter. Subsequently, an averaging operation or a weighted average operation may be performed on white balance compensation parameters respectively corresponding to the M first images, and an obtained result of the averaging operation or the weighted average operation may be used as the white balance compensation parameter adaptable to the target image sensor.

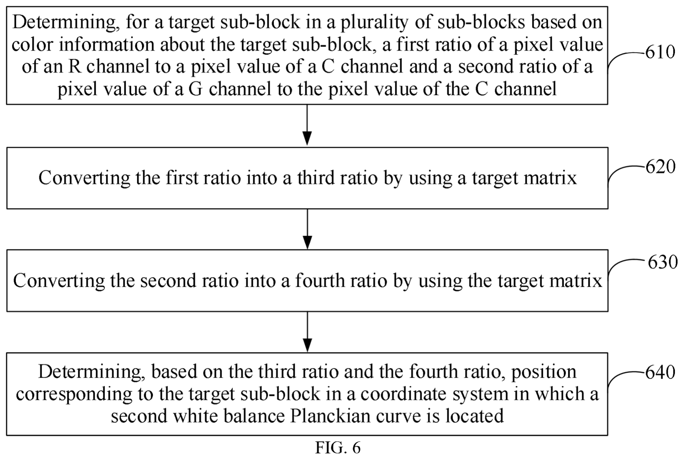

FIG. 6 is a schematic flowchart of a method for determining, based on a target matrix and color information about a plurality of sub-blocks, positions respectively corresponding to the plurality of sub-blocks in a coordinate system in which a second white balance Planckian curve is located according to some exemplary embodiments of this disclosure. The method shown in FIG. 6 may include steps 610, 620, 630, and 640. In the method shown in FIG. 6, the color filter array of the target image sensor may be an RCCG array.

Step 610: Determining, for a target sub-block in the plurality of sub-blocks based on the color information about the target sub-block, a first ratio of a pixel value of an R channel to a pixel value of a C channel and a second ratio of a pixel value of a G channel to the pixel value of the C channel.

Optionally, the plurality of sub-blocks may be N sub-blocks, and the target sub-block may be any one among the N sub-blocks. The "target" in the target sub-block does not constitute a limitation on the target sub-block.

Optionally, the color information about the target sub-block may include a first pixel value of the target sub-block on the R channel, a second pixel value of the target sub-block on the C channel, and a third pixel value of the target sub-block on the G channel. In this case, the first pixel value may be divided by the second pixel value to obtain the first ratio of the pixel value of the R channel to the pixel value of the C channel. In addition, the third pixel value may also be divided by the second pixel value to obtain the second ratio of the pixel value of the G channel to the pixel value of the C channel.

Step 620: Converting the first ratio into a third ratio by using the target matrix.

Optionally, the first ratio may be multiplied by the target matrix, and an obtained multiplication result may be used as the third ratio.

Step 630: Converting the second ratio into a fourth ratio by using the target matrix.

Optionally, the second ratio may be multiplied by the target matrix, and an obtained multiplication result may be used as the fourth ratio.

Step 640: Determining, based on the third ratio and the fourth ratio, the position corresponding to the target sub-block in the coordinate system in which the second white balance Planckian curve is located.

Optionally, the third ratio may be considered as a first type of ratio, and the fourth ratio may be considered as a second type of ratio. Therefore, a position with the third ratio as a horizontal coordinate and the fourth ratio as a vertical coordinate may be determined in the coordinate system in which the second white balance Planckian curve is located. This position may be used as the position corresponding to the target sub-block.

In the embodiments of this disclosure, the first ratio and the second ratio may be efficiently and quickly determined based on the color information about the target sub-block, and may be efficiently and quickly converted into the third ratio and the fourth ratio by using the target matrix. In this way, effective reference may be provided for determining the position corresponding to the target sub-block, helping to ensure rationality of the determined position.

Certainly, the position corresponding to the target sub-block is not limited to the coordinate system in which the second white balance Planckian curve is located, wherein the horizontal coordinate is the third ratio and the vertical coordinate is the fourth ratio. For example, the position corresponding to the target sub-block may also have a slight deviation from the position where the horizontal coordinate is the third ratio and the vertical coordinate is the fourth ratio.

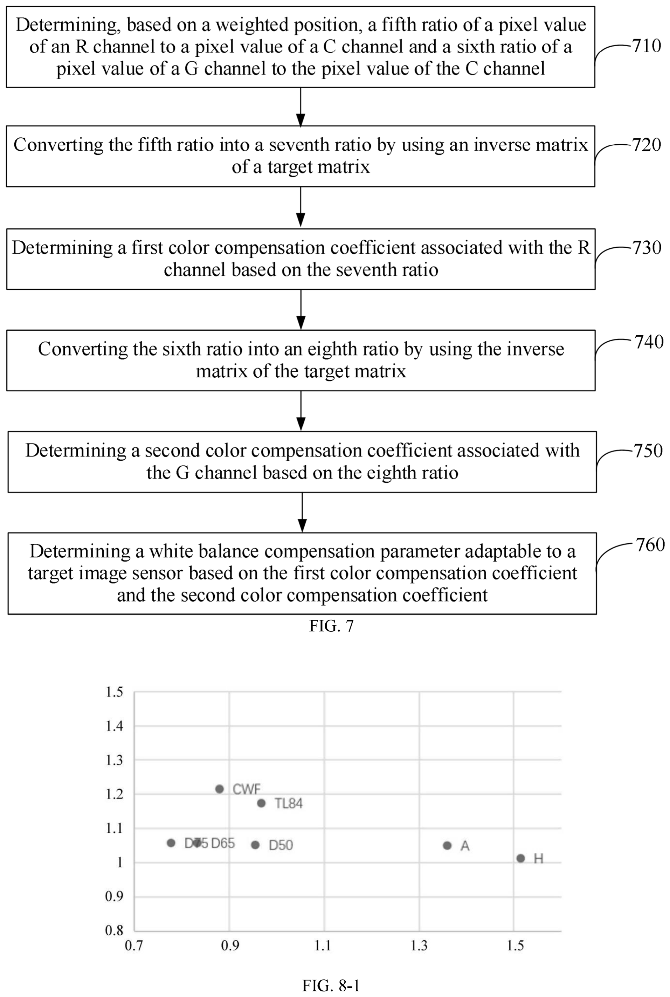

FIG. 7 is a schematic flowchart of a method for determining a white balance compensation parameter adaptable to a target image sensor based on a weighted position and an inverse matrix of the target matrix according to some exemplary embodiments of this disclosure. The method shown in FIG. 7 may include steps 710, 720, 730, 740, 750, and 760. In the method shown in FIG. 7, the color filter array of the target image sensor may be an RCCG array.

Step 710: Determining, based on the weighted position, a fifth ratio of a pixel value of an R channel to a pixel value of a C channel and a sixth ratio of a pixel value of a G channel to the pixel value of the C channel.

Optionally, a horizontal coordinate of the weighted position may be used as the fifth ratio of the pixel value of the R channel to the pixel value of the C channel, and a vertical coordinate of the weighted position may be used as the sixth ratio of the pixel value of the G channel to the pixel value of the C channel.

Step 720: Converting the fifth ratio into a seventh ratio by using the inverse matrix of the target matrix.

Optionally, the fifth ratio may be multiplied by the inverse matrix of the target matrix, and an obtained multiplication result may be used as the seventh ratio.

Step 730: Determining a first color compensation coefficient associated with the R channel based on the seventh ratio.

Optionally, a reciprocal of the several ratio may be used as the first color compensation coefficient associated with the R channel. The first color compensation coefficient may be a coefficient used for color compensation between the R channel and the C channel. The first color compensation coefficient may also be represented by Rgain. If it is assumed that the seventh ratio is represented by R/C, it may be satisfied that:

$$\text{Rgain} = 1/(R/C)$$

Step 740: Converting the sixth ratio into an eighth ratio by using the inverse matrix of the target matrix.

Optionally, the sixth ratio may be multiplied by the inverse matrix of the target matrix, and an obtained multiplication result may be used as the eighth ratio.

Step 750: Determining a second color compensation coefficient associated with the G channel based on the eighth ratio.

Optionally, a reciprocal of the eighth ratio may be used as the second color compensation coefficient associated with the G channel. The second color compensation coefficient may be a coefficient used for color compensation between the G channel and the C channel. The second color compensation coefficient may also be represented by Ggain. If it is assumed that the eighth ratio is represented by G/C, it may be satisfied that:

$$\text{Ggain} = 1/(G/C)$$

Step 760: Determining the white balance compensation parameter adaptable to the target image sensor based on the first color compensation coefficient and the second color compensation coefficient.

Optionally, the white balance compensation parameter adaptable to the target image sensor may include the first color compensation coefficient and the second color compensation coefficient.

In an example, the target image sensor is an RCCG image sensor, and the second image is raw data collected by the RCCG image sensor. There are a total of V pixels in the raw data, wherein V1 pixels correspond to the R channel, V2 pixels correspond to the C channel, and V3 pixels correspond to the G channel. Thus, pixel values of the V1 pixels may be multiplied by the first color compensation coefficient, and pixel values of the V3 pixels may be multiplied by the second color compensation coefficient. In this way, the raw data on which white balance correction is performed may be obtained.

Certainly, interpolation processing may also be performed on the raw data that serves as the second image, and an interpolation result may include full-resolution images respectively corresponding to the R channel, the C channel, and the G channel. The interpolation result may be considered as images suitable for user observation. Subsequently, white balance correction may be performed on the interpolation result by using the first color compensation coefficient and the second color compensation coefficient.

In the embodiments of this disclosure, the fifth ratio of the pixel value of the R channel to the pixel value of the C channel and the sixth ratio of the pixel value of the G channel to the pixel value of the C channel may be efficiently and quickly determined based on the weighted position. By the inverse matrix of the target matrix, the fifth ratio may be efficiently and quickly converted into the seventh ratio, and the sixth ratio may be efficiently and quickly converted into the eighth ratio. In this way, effective reference may be provided for determining the first color compensation coefficient and the second color compensation coefficient, to guide how to perform color compensation between channels. On this basis, a more reasonable and reliable white balance compensation parameter may be determined.

In some optional examples, an optical specification of the target image sensor may be same as that of the reference image sensor.

It should be noted that the optical specification of the target image sensor being same as that of the reference image sensor may be understood as: except different color filter arrays, the target image sensor and the reference image sensor have same parameters. For example, resolution, cell sizes, shutter type, and the like of the target image sensor and the reference image sensor may all be the same. In this way, it helps to avoid impact of differences in the optical specifications of the target image sensor and the reference image sensor on the determining of the white balance compensation parameter, thereby ensuring rationality and reliability of the determined white balance compensation parameter.

In some optional examples, a collection timepoint of the second image may be later than that of the first image.

Optionally, the first image may be an image collected by the target image sensor at a timepoint t0, and the second image may be an image collected by the target image sensor at a timepoint t1, where the timepoint t1 may be later than the timepoint t0. For example, the timepoint t1 may be a timepoint next to the timepoint t0, or the timepoint t1 may be at a preset time interval from the timepoint t0. In this way, good white balance correction effects can be achieved for images collected by the target image sensor after the timepoint t1.

In some optional examples, the reference image sensor may be an RGGB image sensor, and the target image sensor may be an RCCG image sensor.

For the RCCG image sensor, a corresponding white balance Planckian curve (equivalent to the first white balance Planckian curve described above) may be obtained through calibration. A specific calibration process may include:

(a1): At a certain color temperature, capturing images for a 24-color chart by the RCCG image sensor, to obtain corresponding raw data. The obtained raw data is split into a plurality subsets of data. Based on a user input operation, several subsets of data are selected from the plurality subsets of data that are obtained through splitting, to form a white balance gray area (similar to the target gray area described above). The white balance gray area may include 6 sub-blocks. For each of the 6 sub-blocks, statistics about a ratio Z1 of the pixel value of the R channel to the pixel value of the C channel and a ratio Z2 of the pixel value of the G channel to the pixel value of the C channel may be collected.

(a2): Calculating an average value of 6 Z1s that are in one-to-one correspondence to the 6 sub-blocks to obtain an R/C ratio, and calculating an average value of 6 G/Cs that are in one-to-one correspondence to the 6 sub-blocks to obtain a G/C ratio. Thus, the R/C ratio and the G/C ratio at a specific color temperature are obtained. In a similar way, R/C ratios and G/C ratios at various color temperatures may be obtained. Subsequently, the first white balance Planckian curve may be plotted by the R/C ratio (equivalent to the first type of ratio described above) as a horizontal coordinate and the G/C ratio (equivalent to the second type of ratio described above) as a vertical coordinate.

In addition, quantum efficiency response curves may also be determined for the RCCG image sensor and the RGGB image sensor, respectively. A QE correction matrix (equivalent to the target matrix described above) for mapping the quantum efficiency response curve of the RCCG image sensor to the quantum efficiency response curve of the RGGB image sensor may be determined by using the least square method or other regression algorithms. The first white balance Planckian curve may be converted into the second white balance Planckian curve by using the QE correction matrix.

For each of the 6 sub-blocks involved in (a1), the corresponding Z1 and Z2 of the sub-block may be respectively multiplied by the QE correction matrix to determine a landing point of the sub-block in the coordinate system in which the second white balance Planckian curve is located (equivalent to a position of the sub-block). According to a rule that a weight is greater if the landing point is closer to the second white balance Planckian curve, weights may be determined for each of the 6 sub-blocks. Positions corresponding to the 6 sub-blocks may be weighted and averaged by using the determined weight, to obtain a weighted position. The seventh ratio and the eighth ratio described above may be obtained by multiplying a horizontal coordinate and a vertical coordinate of the weighted position by an inverse matrix of the QE correction matrix, respectively. Subsequently, reciprocals of the seventh ratio and the eighth ratio may be calculated respectively to obtain the Rgain and Ggain described above, which may form a white balance compensation parameter adaptable to the RCCG image sensor. For raw data collected by the RCCG image sensor later, the white balance compensation parameter may be used to perform white balance correction on the raw data, so as to achieve color compensation between channels, thereby enabling a white object in the real physical world to still appear white in image as possible.

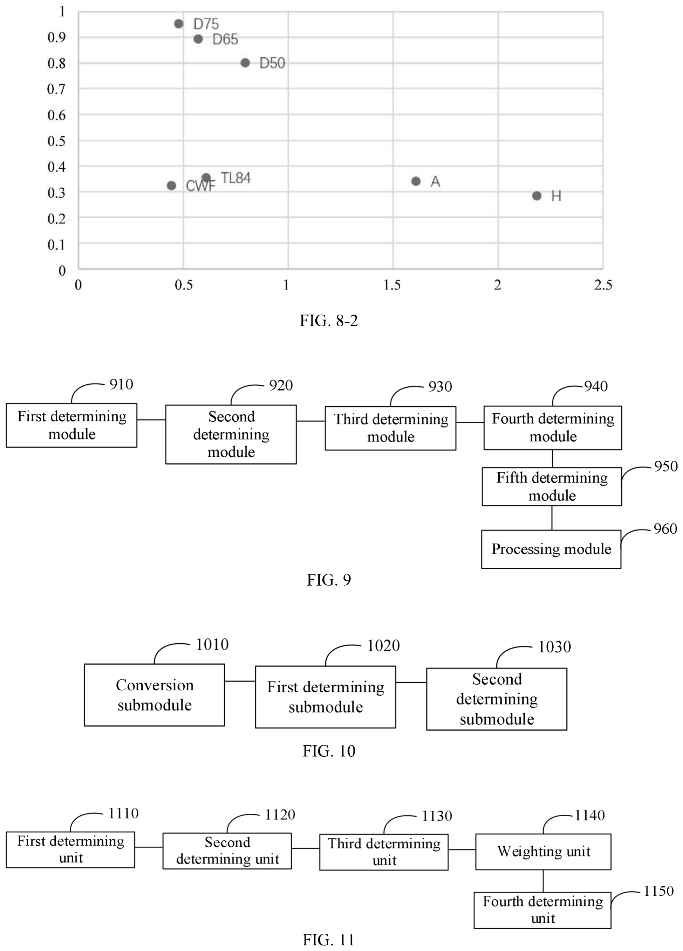

The inventor finds through experiments that in the related technologies, the white balance Planckian curve of the RCCG image sensor may be defined by 7 points shown in FIG. 8-1; while in the embodiments of this disclosure, the second white balance Planckian curve may be defined by 7 points shown in FIG. 8-2. In FIG. 8-1 and FIG. 8-2, each of D75, D65, D50, TL84, CWF, A, and H represents one type of light source, and different light sources correspond to different color temperatures. By observing FIG. 8-1 and FIG. 8-2, it may be learned that the points corresponding to different color temperatures in FIG. 8-2 are more dispersed as compared to those in FIG. 8-1. Increasing position discriminability of points corresponding to different color temperatures helps to prevent color temperature interference from affecting the white balance correction effects, thereby improving the white balance correction effects.

It should be noted that the target image sensor is not limited to the RCCG image sensor, which theoretically may be any non-RGGB image sensor. A specific type of the target image sensor is not limited in this disclosure.

In view of the above, in the embodiments of this disclosure, for images collected by the image sensor using the type 2 color filter array, a new adaptable balance correction method may be used to achieve good white balance correction effects.

Exemplary apparatus

FIG. 9 is a schematic diagram of a structure of a white balance correction apparatus for images according to some exemplary embodiments of this disclosure. The apparatus shown in FIG. 9 may include:

a first determining module 910, configured to determine a first quantum efficiency response curve for a reference image sensor;
a second determining module 920, configured to determine a second quantum efficiency response curve for a target image sensor of which a color filter array is different from that of the reference image sensor;
a third determining module 930, configured to determine a target matrix for conversion between the second quantum efficiency response curve determined by the second determining module 920 and the first quantum efficiency response curve determined by the first determining module 910;
a fourth determining module 940, configured to determine a first white balance Planckian curve for the target image sensor;
a fifth determining module 950, configured to determine a white balance compensation parameter adaptable to the target image sensor based on the target matrix determined by the third determining module 930, the first white balance Planckian curve determined by the fourth determining module 940, and a first image collected by the target image sensor; and
a processing module 960, configured to perform, based on the white balance compensation parameter determined by the fifth determining module 950, white balance correction on a second image collected by the target image sensor.

In some optional examples, as shown in FIG. 10, the fifth determining module 950 includes:

a conversion submodule 1010, configured to convert the first white balance Planckian curve determined by the fourth determining module 940 into a second white balance Planckian curve of the reference image sensor by using the target matrix determined by the third determining module 930;
a first determining submodule 1020, configured to determine a target gray area in the first image collected by the target image sensor; and
a second determining submodule 1030, configured to determine the white balance compensation parameter adaptable to the target image sensor based on the target matrix determined by the third determining module 930, the second white balance Planckian curve obtained by the conversion submodule 1010, and the target gray area determined by the first determining submodule 1020.

In some optional examples, as shown in FIG. 11, the second determining submodule 1030 includes:

a first determining unit 1110, configured to determine respective color information about a plurality of sub-blocks included in the target gray area determined by the first determining submodule 1020;

a second determining unit 1120, configured to determine, based on the target matrix determined by the third determining module 930 and the respective color information about the plurality of sub-blocks that is determined by the first determining unit 1110, positions respectively corresponding to the plurality of sub-blocks in a coordinate system in which the second white balance Planckian curve is located;

a third determining unit 1130, configured to determine weights respectively corresponding to the plurality of sub-blocks based on the second white balance Planckian curve obtained by the conversion submodule 1010 and the positions respectively corresponding to the plurality of sub-blocks that are determined by the second determining unit 1120;

a weighting unit 1140, configured to weight the positions respectively corresponding to the plurality of sub-blocks that are determined by the second determining unit 1120 by the weights respectively corresponding to the plurality of sub-blocks that are determined by the third determining unit 1130, to obtain a weighted position; and

a fourth determining unit 1150, configured to determine the white balance compensation parameter adaptable to the target image sensor based on the weighted position obtained by the weighting unit 1140 and an inverse matrix of the target matrix.

In some optional examples, the color filter array of the target image sensor is an RCCG array.

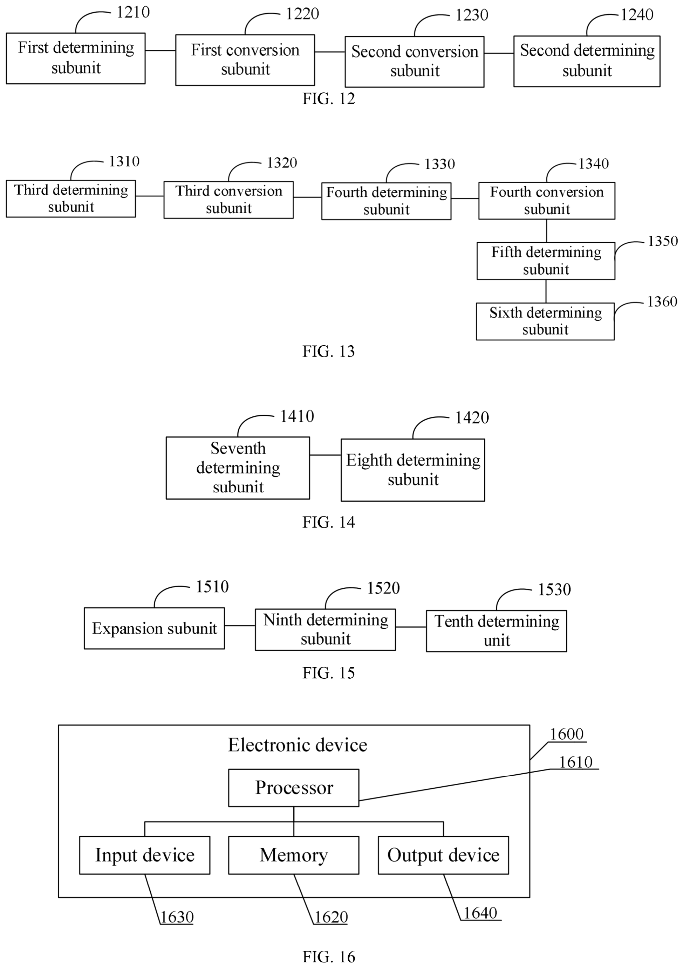

As shown in FIG. 12, the second determining unit 1120 includes:

a first determining subunit 1210, configured to determine, for a target sub-block in the plurality of sub-blocks based on the color information about the target sub-block, a first ratio of a pixel value of an R channel to a pixel value of a C channel and a second ratio of a pixel value of a G channel to the pixel value of the C channel;

a first conversion subunit 1220, configured to convert the first ratio determined by the first determining subunit 1210 into a third ratio by using the target matrix determined by the third determining module 930;

a second conversion subunit 1230, configured to convert the second ratio determined by the first determining subunit 1210 into a fourth ratio by using the target matrix determined by the third determining module 930; and

a second determining subunit 1240, configured to determine, based on the third ratio converted by the first conversion subunit 1220 and the fourth ratio converted by the second conversion subunit 1230, the position corresponding to the target sub-block in the coordinate system in which the second white balance Planckian curve is located.

In some optional examples, the color filter array of the target image sensor is an RCCG array.

As shown in FIG. 13, the fourth determining unit 1150 includes:

a third determining subunit 1310, configured to determine, based on the weighted position obtained by the weighting unit 1140, a fifth ratio of a pixel value of an R channel to a pixel value of a C channel and a sixth ratio of a pixel value of a G channel to the pixel value of the C channel;

a third conversion subunit 1320, configured to convert the fifth ratio determined by the third determining subunit 1310 into a seventh ratio by the inverse matrix of the target matrix;

a fourth determining subunit 1330, configured to determine a first color compensation coefficient associated with the R channel based on the seventh ratio obtained by the third conversion subunit 1320;

a fourth conversion subunit 1340, configured to convert the sixth ratio determined by the third determining subunit 1310 into an eighth ratio by using the inverse matrix of the target matrix;

a fifth determining subunit 1350, configured to determine a second color compensation coefficient associated with the G channel based on the eighth ratio obtained by the fourth conversion subunit 1340; and

a sixth determining subunit 1360, configured to determine the white balance compensation parameter adaptable to the target image sensor based on the first color compensation coefficient determined by the fourth determining subunit 1330 and the second color compensation coefficient determined by the fifth determining subunit 1350.

In some optional examples, as shown in FIG. 14, the third determining unit 1130 includes:

a seventh determining subunit 1410, configured to determine distance information about distances between the positions respectively corresponding to the plurality of sub-blocks and the second white balance Planckian curve; and

an eighth determining subunit 1420, configured to determine the weights respectively corresponding to the plurality of sub-blocks based on the distance information respectively corresponding to the plurality of sub-blocks that is determined by the seventh determining subunit 1410.

In some optional examples, as shown in FIG. 15, the third determining unit 1130 includes:

an expansion subunit 1510, configured to perform, under the coordinate system in which the second white balance Planckian curve is located, expansion processing on the second white balance Planckian curve to obtain an expanded area;

a ninth determining subunit 1520, configured to determine distribution information of the positions respectively corresponding to the plurality of sub-blocks relative to the expanded area obtained by the expansion subunit 1510; and

a tenth determining subunit 1530, configured to determine the weights respectively corresponding to the plurality of sub-blocks based on the distribution information respectively corresponding to the plurality of sub-blocks that is determined by the ninth determining unit 1520.

In some optional examples,

the color filter array of the reference image sensor is an RGGB array;
and/or
an optical specification of the target image sensor is same as that of the reference image sensor;
and/or
a collection timepoint of the second image is later than that of the first image.

In the apparatus in this disclosure, various optional embodiments, optional implementations, and optional examples described above may be flexibly selected and combined according to requirements, so as to implement corresponding functions and effects. These are not enumerated in this disclosure.

Exemplary electronic device

FIG. 16 is a block diagram of an electronic device according to an embodiment of this disclosure. An electronic device 1600 includes one or more processors 1610 and a memory 1620.

The processor 1610 may be a central processing unit (CPU) or another form of processing unit having a data processing capability and/or an instruction execution capability, and may control other components in the electronic device 1600 to implement desired functions.

The memory 1620 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1610 may execute the one or more program instructions to implement the method according to various embodiments of this disclosure that are described above and/or other desired functions.

In an example, the electronic device 1600 may further include an input device 1630 and an output device 1640. These components are connected to each other through a bus system and/or another form of connection mechanism (not shown).

The input device 1630 may further include, for example, a keyboard and a mouse.

The output device 1640 may output various information to the outside, and may include, for example, a display, a speaker, a printer, a communication network, and a remote output device connected to the communication network.

Certainly, for simplicity, FIG. 16 shows only some of components in the electronic device 1600 that are related to this disclosure, and components such as a bus and an input/output interface are omitted. In addition, according to specific application situations, the electronic device 1600 may further include any other appropriate components.

Exemplary computer program product and computer readable storage medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A white balance correction method for images, **characterized in that** the method comprises:

   determining (110) a first quantum efficiency response curve for a reference image sensor;
   determining (120) a second quantum efficiency response curve for a target image sensor, wherein a color filter array of the target image sensor is different from that of the reference image sensor;
   determining (130) a target matrix for conversion between the second quantum efficiency response curve and the first quantum efficiency response curve;
   determining (140) a first white balance Planckian curve for the target image sensor;
   determining (150) a white balance compensation parameter adaptable to the target image sensor based on the target matrix, the first white balance Planckian curve, and a first image collected by the target image sensor; and
   performing (160), based on the white balance compensation parameter, white balance correction on a second image collected by the target image sensor.

2. The method according to claim 1, wherein the determining (150) a white balance compensation parameter adaptable to the target image sensor based on the target matrix, the first white balance Planckian curve, and a first image collected by the target image sensor comprises:

   converting (210) the first white balance Planckian curve into a second white balance Planckian curve of the reference image sensor by using the target matrix;
   determining (220) a target gray area in the first image collected by the target image sensor; and
   determining (230) the white balance compensation parameter adaptable to the target image sensor based on the target matrix, the second white balance Planckian curve, and the target gray area.

3. The method according to claim 2, wherein the determining (230) the white balance compensation parameter adaptable to the target image sensor based on the target matrix, the second white balance Planckian curve, and the target gray area comprises:

   determining (310) respective color information about a plurality of sub-blocks comprised in the target gray area;
   determining (320), based on the target matrix and the respective color information about the plurality of sub-blocks, positions respectively corresponding to the plurality of sub-blocks in a coordinate system in which the second white balance Planckian curve is located;

determining (330) weights respectively corresponding to the plurality of sub-blocks based on the second white balance Planckian curve and the positions respectively corresponding to the plurality of sub-blocks;

weighting (340) the positions respectively corresponding to the plurality of sub-blocks by the weights respectively corresponding to the plurality of sub-blocks, to obtain a weighted position; and

determining (350) the white balance compensation parameter adaptable to the target image sensor based on the weighted position and an inverse matrix of the target matrix.

4. The method according to claim 3, wherein the color filter array of the target image sensor is an RCCG array; and the determining (320), based on the target matrix and the respective color information about the plurality of sub-blocks, positions respectively corresponding to the plurality of sub-blocks in a coordinate system in which the second white balance Planckian curve is located comprises:

determining (610), for a target sub-block in the plurality of sub-blocks based on the color information about the target sub-block, a first ratio of a pixel value of an R channel to a pixel value of a C channel and a second ratio of a pixel value of a G channel to the pixel value of the C channel;

converting (620) the first ratio into a third ratio by using the target matrix;

converting (630) the second ratio into a fourth ratio by using the target matrix; and

determining (640), based on the third ratio and the fourth ratio, the position corresponding to the target sub-block in the coordinate system in which the second white balance Planckian curve is located.

5. The method according to claim 3, wherein the color filter array of the target image sensor is an RCCG array; and the determining (350) the white balance compensation parameter adaptable to the target image sensor based on the weighted position and an inverse matrix of the target matrix comprises:

determining (710), based on the weighted position, a fifth ratio of a pixel value of an R channel to a pixel value of a C channel and a sixth ratio of a pixel value of a G channel to the pixel value of the C channel;

converting (720) the fifth ratio into a seventh ratio by using the inverse matrix of the target matrix;

determining (730) a first color compensation coefficient associated with the R channel based on the seventh ratio;

converting (740) the sixth ratio into an eighth ratio by using the inverse matrix of the target matrix;

determining (750) a second color compensation coefficient associated with the G channel based on the eighth ratio; and

determining (760) the white balance compensation parameter adaptable to the target image sensor based on the first color compensation coefficient and the second color compensation coefficient.

6. The method according to claim 3, wherein the determining (330) weights respectively corresponding to the plurality of sub-blocks based on the second white balance Planckian curve and the positions respectively corresponding to the plurality of sub-blocks comprises:

determining (410) distance information about distances between the positions respectively corresponding to the plurality of sub-blocks and the second white balance Planckian curve; and

determining (420) the weights respectively corresponding to the plurality of sub-blocks based on the distance information respectively corresponding to the plurality of sub-blocks.

7. The method according to claim 3, wherein the determining (330) weights respectively corresponding to the plurality of sub-blocks based on the second white balance Planckian curve and the positions respectively corresponding to the plurality of sub-blocks comprises:

performing (510), under the coordinate system, expansion processing on the second white balance Planckian curve to obtain an expanded area;

determining (520) distribution information of the positions respectively corresponding to the plurality of sub-blocks relative to the expanded area; and

determining (530) the weights respectively corresponding to the plurality of sub-blocks based on the distribution information respectively corresponding to the plurality of sub-blocks.

8. The method according to any one of claims 1 to 7, wherein

the color filter array of the reference image sensor is an RGGB array; and/or

an optical specification of the target image sensor is same as that of the reference image sensor; and/or
a collection timepoint of the second image is later than that of the first image.

9. A white balance correction apparatus for images, **characterized in that** the apparatus comprises:

a first determining module (910), configured to determine a first quantum efficiency response curve for a reference image sensor;
a second determining module (920), configured to determine a second quantum efficiency response curve for a target image sensor of which a color filter array is different from that of the reference image sensor;
a third determining module (930), configured to determine a target matrix for conversion between the second quantum efficiency response curve determined by the second determining module (920) and the first quantum efficiency response curve determined by the first determining module (910);
a fourth determining module (940), configured to determine a first white balance Planckian curve for the target image sensor;
a fifth determining module (950), configured to determine a white balance compensation parameter adaptable to the target image sensor based on the target matrix determined by the third determining module (930), the first white balance Planckian curve determined by the fourth determining module (940), and a first image collected by the target image sensor; and
a processing module (960), configured to perform, based on the white balance compensation parameter determined by the fifth determining module (950), white balance correction on a second image collected by the target image sensor.

10. A computer readable storage medium, on which a computer program is stored, wherein the computer program, when executed by a processor, causes the processor to implement the white balance correction method for images according to any one of claims 1 to 8.

11. An electronic device, **characterized in that** the electronic device comprises:

a processor (1610); and
a memory (1620), configured to store processor-executable instructions, wherein
the processor (1610) is configured to read the executable instructions from the memory (1620), and execute the instructions to implement a white balance correction method for images, wherein the method comprises:

determining (110) a first quantum efficiency response curve for a reference image sensor;
determining (120) a second quantum efficiency response curve for a target image sensor, wherein a color filter array of the target image sensor is different from that of the reference image sensor;
determining (130) a target matrix for conversion between the second quantum efficiency response curve and the first quantum efficiency response curve;
determining (140) a first white balance Planckian curve for the target image sensor;
determining (150) a white balance compensation parameter adaptable to the target image sensor based on the target matrix, the first white balance Planckian curve, and a first image collected by the target image sensor; and
performing (160), based on the white balance compensation parameter, white balance correction on a second image collected by the target image sensor.

12. The electronic device according to claim 11, wherein the determining (150) a white balance compensation parameter adaptable to the target image sensor based on the target matrix, the first white balance Planckian curve, and a first image collected by the target image sensor comprises:

converting (210) the first white balance Planckian curve into a second white balance Planckian curve of the reference image sensor by using the target matrix;
determining (220) a target gray area in the first image collected by the target image sensor; and
determining (230) the white balance compensation parameter adaptable to the target image sensor based on the target matrix, the second white balance Planckian curve, and the target gray area.

13. The electronic device according to claim 12, wherein the determining (230) the white balance compensation parameter adaptable to the target image sensor based on the target matrix, the second white balance Planckian curve, and the target gray area comprises:

determining (310) respective color information about a plurality of sub-blocks comprised in the target gray area;
determining (320), based on the target matrix and the respective color information about the plurality of sub-blocks, positions respectively corresponding to the plurality of sub-blocks in a coordinate system in which the second white balance Planckian curve is located;
determining (330) weights respectively corresponding to the plurality of sub-blocks based on the second white balance Planckian curve and the positions respectively corresponding to the plurality of sub-blocks;
weighting (340) the positions respectively corresponding to the plurality of sub-blocks by the weights respectively corresponding to the plurality of sub-blocks, to obtain a weighted position; and
determining (350) the white balance compensation parameter adaptable to the target image sensor based on the weighted position and an inverse matrix of the target matrix.

14. The electronic device according to claim 13, wherein the color filter array of the target image sensor is an RCCG array; and
the determining (320), based on the target matrix and the respective color information about the plurality of sub-blocks, positions respectively corresponding to the plurality of sub-blocks in a coordinate system in which the second white balance Planckian curve is located comprises:

determining (610), for a target sub-block in the plurality of sub-blocks based on the color information about the target sub-block, a first ratio of a pixel value of an R channel to a pixel value of a C channel and a second ratio of a pixel value of a G channel to the pixel value of the C channel;
converting (620) the first ratio into a third ratio by using the target matrix;
converting (630) the second ratio into a fourth ratio by using the target matrix; and
determining (640), based on the third ratio and the fourth ratio, the position corresponding to the target sub-block in the coordinate system in which the second white balance Planckian curve is located.

15. The electronic device according to claim 13, wherein the color filter array of the target image sensor is an RCCG array; and
the determining (350) the white balance compensation parameter adaptable to the target image sensor based on the weighted position and an inverse matrix of the target matrix comprises:

determining (710), based on the weighted position, a fifth ratio of a pixel value of an R channel to a pixel value of a C channel and a sixth ratio of a pixel value of a G channel to the pixel value of the C channel;
converting (720) the fifth ratio into a seventh ratio by using the inverse matrix of the target matrix;
determining (730) a first color compensation coefficient associated with the R channel based on the seventh ratio;
converting (740) the sixth ratio into an eighth ratio by using the inverse matrix of the target matrix;
determining (750) a second color compensation coefficient associated with the G channel based on the eighth ratio; and
determining (760) the white balance compensation parameter adaptable to the target image sensor based on the first color compensation coefficient and the second color compensation coefficient.

| Determining a first quantum efficiency response curve for a reference image sensor | 110 |

$\downarrow$

| Determining a second quantum efficiency response curve for a target image sensor, wherein a color filter array of the target image sensor is different from that of the reference image sensor | 120 |

$\downarrow$

| Determining a target matrix for conversion between the second quantum efficiency response curve and the first quantum efficiency response curve | 130 |

$\downarrow$

| Determining a first white balance Planckian curve for the target image sensor | 140 |

$\downarrow$

| Determining a white balance compensation parameter adaptable to the target image sensor based on the target matrix, the first white balance Planckian curve, and a first image collected by the target image sensor | 150 |

$\downarrow$

| Performing, based on the white balance compensation parameter, white balance correction on a second image collected by the target image sensor | 160 |

FIG. 1

Converting a first white balance Planckian curve into a second white balance Planckian curve of a reference image sensor by using a target matrix —210

Determining a target gray area in a first image collected by a target image sensor —220

Determining a white balance compensation parameter adaptable to the target image sensor based on the target matrix, the second white balance Planckian curve, and the target gray area —230

FIG. 2

Determining respective color information about a plurality of sub-blocks included in a target gray area —310

Determining, based on a target matrix and the respective color information about the plurality of sub-blocks, positions respectively corresponding to the plurality of sub-blocks in a coordinate system in which a second white balance Planckian curve is located —320

Determining weights respectively corresponding to the plurality of sub-blocks based on the second white balance Planckian curve and the positions respectively corresponding to the plurality of sub-blocks —330

Weighting the positions respectively corresponding to the plurality of sub-blocks by the weights respectively corresponding to the plurality of sub-blocks, to obtain a weighted position —340

Determining a white balance compensation parameter adaptable to a target image sensor based on the weighted position and an inverse matrix of the target matrix —350

FIG. 3

Determining distance information about distances between positions respectively corresponding to a plurality of sub-blocks and a second white balance Planckian curve ⌐410

Determining weights respectively corresponding to the plurality of sub-blocks based on the distance information respectively corresponding to the plurality of sub-blocks ⌐420

FIG. 4

Performing, under a coordinate system in which a second white balance Planckian curve is located, expansion processing on a second white balance Planckian curve to obtain an expanded area ⌐510

Determining distribution information of positions respectively corresponding to a plurality of sub-blocks relative to the expanded area ⌐520

Determining weights respectively corresponding to the plurality of sub-blocks based on the distribution information respectively corresponding to the plurality of sub-blocks ⌐530

FIG. 5

Determining, for a target sub-block in a plurality of sub-blocks based on color information about the target sub-block, a first ratio of a pixel value of an R channel to a pixel value of a C channel and a second ratio of a pixel value of a G channel to the pixel value of the C channel — 610

Converting the first ratio into a third ratio by using a target matrix — 620

Converting the second ratio into a fourth ratio by using the target matrix — 630

Determining, based on the third ratio and the fourth ratio, position corresponding to the target sub-block in a coordinate system in which a second white balance Planckian curve is located — 640

FIG. 6

Determining, based on a weighted position, a fifth ratio of a pixel value of an R channel to a pixel value of a C channel and a sixth ratio of a pixel value of a G channel to the pixel value of the C channel — 710

Converting the fifth ratio into a seventh ratio by using an inverse matrix of a target matrix — 720

Determining a first color compensation coefficient associated with the R channel based on the seventh ratio — 730

Converting the sixth ratio into an eighth ratio by using the inverse matrix of the target matrix — 740

Determining a second color compensation coefficient associated with the G channel based on the eighth ratio — 750

Determining a white balance compensation parameter adaptable to a target image sensor based on the first color compensation coefficient and the second color compensation coefficient — 760

FIG. 7

FIG. 8-1

FIG. 8-2

FIG. 9

FIG. 10

FIG. 11

| First determining subunit | — 1210 | First conversion subunit | — 1220 | Second conversion subunit | — 1230 | Second determining subunit | — 1240 |

FIG. 12

| Third determining subunit | — 1310 | Third conversion subunit | — 1320 | Fourth determining subunit | — 1330 | Fourth conversion subunit | — 1340 |

Fifth determining subunit — 1350

Sixth determining subunit — 1360

FIG. 13

| Seventh determining subunit | — 1410 | Eighth determining subunit | — 1420 |

FIG. 14

| Expansion subunit | — 1510 | Ninth determining subunit | — 1520 | Tenth determining unit | — 1530 |

FIG. 15

Electronic device  1600

Processor  1610

Input device  1630

Memory  1620

Output device  1640

FIG. 16

# EUROPEAN SEARCH REPORT

**Application Number**

EP 25 21 5940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TW 201 102 965 A (HIMAX IMAGIMG INC [KY]) 16 January 2011 (2011-01-16) * the whole document * | 1-15 | INV. H04N23/88 H04N23/81 H04N23/84 H04N25/61 H04N9/31 G06T7/90 |
| A | US 2024/196104 A1 (TAYLOR DOUGLAS [US] ET AL) 13 June 2024 (2024-06-13) * abstract * * figures 1-4 * * paragraph [0034] - paragraph [0123] * | 1-15 | |
| A | US 2019/045162 A1 (KRESTYANNIKOV EVGENY [FI] ET AL) 7 February 2019 (2019-02-07) * abstract * * figures 5-8 * * paragraph [0048] - paragraph [0072] * | 1-15 | |

**TECHNICAL FIELDS SEARCHED (IPC)**

H04N
G06T

The present search report has been drawn up for all claims

| Place of search | Date of completion of the search | Examiner |
|---|---|---|
| Munich | 19 February 2026 | Elyamany, Noha |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5940

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2026

| Patent document cited in search report | | Publication date | Patent family member(s) | | Publication date |
|---|---|---|---|---|---|
| TW 201102965 | A | 16-01-2011 | NONE | | |
| US 2024196104 | A1 | 13-06-2024 | US | 2024196104 A1 | 13-06-2024 |
| | | | US | 2025175713 A1 | 29-05-2025 |
| US 2019045162 | A1 | 07-02-2019 | DE | 102019106252 A1 | 10-10-2019 |
| | | | US | 2019045162 A1 | 07-02-2019 |

EPO FORM P0459

For more details about this annex : see Official Journal of the European Patent Office, No. 12/82